Europäisches Patentamt

European Patent Office

Office européen des brevets

(11) Numéro de publication: **0 200 588**
**A1**

## (12) DEMANDE DE BREVET EUROPEEN

(21) Numéro de dépôt: **86400608.5**

(22) Date de dépôt: **21.03.86**

(51) Int. Cl.⁴: **F 23 J 7/00**
**B 01 D 53/34**

(30) Priorité: **25.03.85 FR 8504404**

(43) Date de publication de la demande:
**05.11.86 Bulletin 86/45**

(84) Etats contractants désignés:
**AT BE CH DE GB IT LI LU NL SE**

(71) Demandeur: **CONSTRUCTIONS NAVALES ET INDUSTRIELLES DE LA MEDITERRANEE**
**35, rue de Bassano**
**F-75008 Paris(FR)**

(72) Inventeur: **Durand, Jean-Pierre**
**709, Chemin d'Artaud à Pignet**
**F-83500 La Seyne Sur Mer(FR)**

(74) Mandataire: **Armengaud Ainé, Alain**
**Cabinet ARMENGAUD AINE 3 Avenue Bugeaud**
**F-75116 Paris(FR)**

(54) Procédé d'épuration des fumées des usines d'incinération d'ordures ménagères.

(57) Procédé d'épuration des fumées des usines d'incinération d'ordures ménagères, en vue de l'élimination des polluants gazeux, par mise au contact des fumées avec un produit basique qui neutralise les acides et est ensuite retenu dans un système de dépoussiérage, caractérisé en ce qu'on injecte le produit basique directement dans la chaudière.

EP 0 200 588 A1

Croydon Printing Company Ltd.

- 1 -

## Procédé d'épuration des fumées des usines d'incinération d'ordures ménagères

La présente invention est relative, d'une façon générale, à l'épuration des fumées des usines d'incinération d'ordures ménagères, notamment en vue de l'élimination des polluants gazeux (HCl, HF, $SO_2$, etc..), contenus dans ces fumées.

Dans les procédés d'épuration actuellement mis en oeuvre dans les usines d'incinération d'ordures ménagères, on met en contact le flux gazeux à épurer, c'est-à-dire les fumées provenant de la chaudière de l'usine, avec un produit basique, généralement de la chaux, qui neutralise les acides et qui est ensuite retenu dans un système de dépoussiérage. Le produit basique utilisé pour la neutralisation peut être sous forme solide, pâteuse ou liquide.

Dans les usines actuelles, on utilise un réacteur, interposé entre le four ou la chaudière et le dépoussiéreur, ce réacteur étant conçu de façon à réaliser un bon contact entre les fumées sortant de la chaudière ou du four et le produit basique, qui constitue le réactif utilisé. Ce contact est obtenu par divers moyens, tels que, notamment : venturi, lit fluidisé, turbulateur, etc..

Cette technique connue donne généralement satisfaction ; cependant, sa mise en oeuvre est coûteuse, étant donné qu'elle exige la réalisation du réacteur, dont le prix de revient est relativement important, et qu'elle se traduit par un encombrement important, ce réacteur devant être placé entre la chaudière de l'usine d'incinération et le système de dépoussiérage.

La présente invention se propose de pallier les inconvénients des installations d'épuration existantes, et, dans ce but, elle utilise le four ou la chaudière de l'usine d'incinération comme réacteur.

En conséquence, cette invention concerne un procédé d'épuration des fumées des usines d'incinération d'ordures ménagères, en vue de l'élimination des polluants gazeux, par mise en contact des fumées avec un produit basique qui neutralise les acides et est ensuite retenu dans un système de dépoussiérage, caractérisé en ce qu'on injecte le produit basique directement dans la chaudière, ou dans l'eau de refroidissement des fumées, dans le cas d'un four.

Selon l'invention, le point d'injection du produit basique (généralement de la chaux, sous forme solide ou en solution) peut être prévu :
- soit dans la chambre de combustion ou les chambres de rayonnement de la chaudière (notamment lors de l'utilisation de produits basiques en solution) ;
- soit dans les faisceaux tubulaires d'échange de la chaudière (notamment dans le cas de l'utilisation de produits en poudre).

En outre, le point d'injection peut être déterminé en fonction de la température des fumées, qui évolue sur toute la longueur du parcours des gaz : de la chambre de combustion (1000 à 1200°C environ) à la sortie (150 à 300°C).

Dans le cas d'un four, on injecte le réactif basique, de préférence sous la forme de chaux en solution, dans la tour de refroidissement des fumées, qui fait alors office de réacteur.

On comprend que, dans le procédé de l'invention décrit ci-dessus :
- la chaudière, ou la tour de refroidissement, dans le cas d'un four, sert de réacteur ;
- les faisceaux tubulaires servent de turbulateurs, en constituant un très grand nombre de convergents-divergents ;
- les temps de contact entre le réactif basique et les fumées sont très fortement allongés, ce qui augmente les rendements.

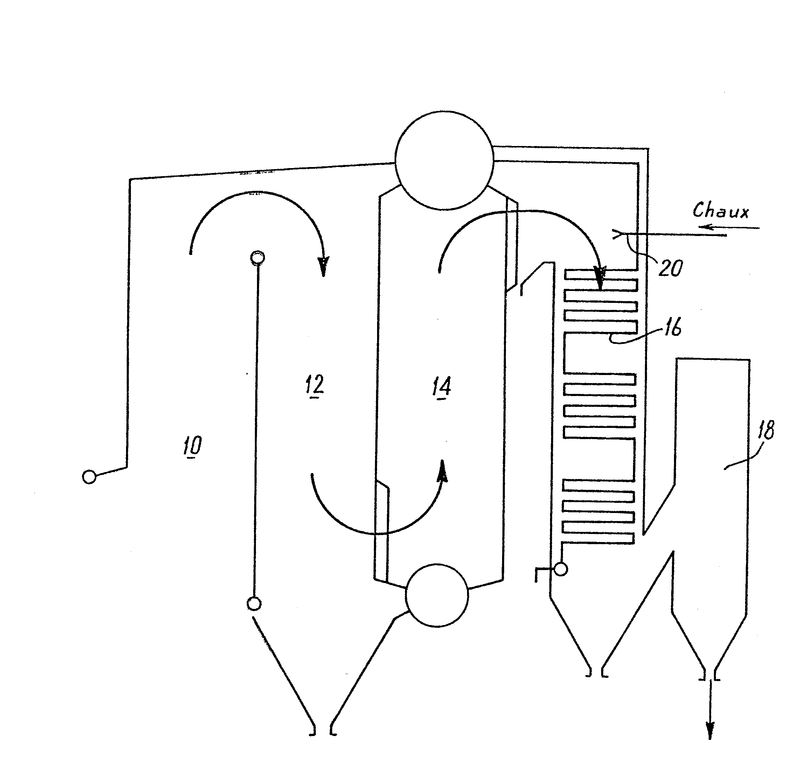

Sur la Figure unique du dessin annexé, on a représenté de façon schématique un exemple de réalisation d'une chaudière d'incinération d'ordures ménagères mettant en oeuvre le procédé selon cette invention.

Sur cette Figure, on voit, en 10, le foyer de la chaudière, en 12 la chambre de rayonnement, en 14 et 16 les faisceaux tubulaires, en 20 le point d'injection du réactif basique (chaux), et en 18 le système de dépoussiérage classique.

Dans cet exemple de mise en oeuvre, qui n'a, bien entendu, aucun caractère limitatif, on injecte la chaux, sous forme pulvérulente de préférence, dans le faisceau d'échange 16 de la chaudière. Bien entendu, comme dans tout réacteur classique utilisé antérieurement, on peut effectuer des recyclages de cendres et de réactifs basiques, prélevés à la sortie de la chaudière.

On peut également prévoir, à la sortie de la chaudière, un réacteur qui parachève la neutralisation commencée dans la chaudière. On augmente ainsi fortement le rendement global, ou, pour un rendement global maintenu constant, la consommation de réactifs est fortement diminuée.

Il demeure bien entendu que cette invention n'est pas limitée aux divers exemples de mise en oeuvre décrits ici, mais qu'elle en englobe toutes les variantes.

Revendications

1. Procédé d'épuration des fumées des usines d'incinération d'ordures ménagères, en vue de l'élimination des polluants gazeux, par mise au contact des fumées avec un produit basique qui neutralise les acides et est ensuite retenu dans un système de dépoussiérage, caractérisé en ce qu'on injecte le produit basique directement dans la chaudière.

2. Procédé selon la revendication 1, caractérisé en ce que le produit basique, dans le cas de l'utilisation d'un four, est injecté dans l'eau de refroidissement, la tour de refroidissement faisant office de réacteur.

3. Procédé selon la revendication 1, caractérisé en ce que le point d'injection du produit réactif basique est situé dans la chambre de combustion ou dans les chambres de rayonnement de la chaudière.

4. Procédé selon la revendication 1, caractérisé en ce que l'injection du réactif basique s'effectue dans les faisceaux tubulaires d'échange de la chaudière.

Chaux

10   12   14   16   18   20

## Office européen des brevets
### RAPPORT DE RECHERCHE EUROPEENNE

EP 86 40 0608

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X | WO-A-8 502 453 (WAAGNER-BIRO)<br>* Revendications 1,13; figure 1 * | 1,3 | F 23 J 7/00<br>B 01 D 53/34 |
| P,X | DE-A-3 340 892 (L. & C. STEINMÜLLER)<br>* Revendications 1,2,5,6; figure 1 * | 1,3 | |
| P,X | POWER, vol. 129, no. 6, juin 1985, pages 35-39, New York, US; J. MAKANSI et al.: "Understand system effects when evaluating sorbent injection"<br>* En entier; figure 6 * | 1,3,4 | |

DOMAINES TECHNIQUES RECHERCHES (Int. Cl.4)

B 01 D 53/00
F 23 J 7/00

Le présent rapport de recherche a été établi pour toutes les revendications

| Lieu de la recherche | Date d'achèvement de la recherche | Examinateur |
|---|---|---|
| LA HAYE | 27-06-1986 | POLESAK, H.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82